# EUROPEAN PATENT APPLICATION

(11) **EP 2 273 475 A1**
(43) Date of publication of application: **12.01.2011**
(21) Application number: 09732700.1
(22) Date of filing: 06.04.2009
(51) Int. Cl.: G09F 9/30, G02F 1/1333, G09F 9/00

(54) **GLASS LAMINATE, DISPLAY PANEL WITH SUPPORT, METHOD FOR PRODUCING GLASS LAMINATE AND METHOD FOR MANUFACTURING DISPLAY PANEL WITH SUPPORT**

(30) Priority: 17.04.2008 JP 2008108169
(71) Applicant: Asahi Glass Company, Limited, Chiyoda-ku Tokyo 100-8405 (JP)
(72) Inventor: KONDO, Satoshi, Tokyo 100-8405 (JP); EBATA, Kenichi, Tokyo 100-8405 (JP)
(74) Representative: Müller-Boré & Partner Patentanwälte
(86) International application number: PCT/JP2009/057084
(87) International publication number: WO 2009/128359

(57) **Abstract**

Disclosed is a glass laminate comprising a thin glass substrate having a fist main surface and a second main surface, a supporting glass substrate having a first main surface and a second main surface, and a resin layer and an outer frame layer arranged between the thin glass substrate and the supporting glass substrate. The resin layer is fixed to the first main surface of the supporting glass substrate and is in close contact with the first main surface of the thin glass substrate, while having easy releasability from the first main surface of the thin glass substrate. The outer frame layer surrounds the resin layer on the first main surface of the supporting glass substrate so that the outside air does not come into contact with the resin layer.

## Description

### TECHNICAL FIELD

The present invention relates to: a glass laminate containing glass substrates for use in liquid display devices, organic EL display devices and the like; a support attached-panel for a display device containing the same; a panel for a display device formed using the same; and a display containing the same. The present invention relates to a method for producing the glass laminate and a method for producing the panel for a display device.

### BACKGROUND ART

In the field of liquid crystal display devices (LCD) and organic EL display devices (OLED), particularly mobile-type display devices such as mobiles and cellular phones, weight saving and thinning of the display devices become important problems.
In order to cope with the problems, it is desired to further reduce the thickness of a glass substrate for use in the display devices. As a method for reducing the thickness, in general, there is performed a method of subjecting the glass substrate to an etching treatment using hydrofluoric acid or the like and further thinning it by physical polishing before or after formation of a member for a display device on a surface of the glass substrate.

However, when the glass substrate is thinned by performing the etching treatment or the like before the formation of a member for a display device on a surface of the glass substrate, strength of the glass substrate is lowered and an amount of deflection is increased. Therefore, there arises a problem that the glass substrate cannot be processed in current production lines.
Moreover, when the glass substrate is thinned by performing the etching treatment or the like after the formation of a member for a display device on a surface of the glass substrate, there arises a problem that fine scratches formed on the surface of the glass substrate in the process of forming the member for a display device on the glass substrate become marked, i.e., a problem of occurrence of etch pits.

Thus, for the purpose of solving such problems, there has been proposed, for example, a method of sticking a glass plate having a small thickness (hereinafter, also referred to as a "thin glass substrate") on another glass substrate (hereinafter, also referred to as a "supporting glass substrate") to form a laminate, performing a predetermined treatment for producing a display device in such a state, and subsequently separating the thin glass substrate from the supporting glass substrate.

For example, Patent Document 1 discloses a method for producing a display device using a glass substrate for a commercial product, including laminating the glass substrate for a commercial product to a glass substrate for reinforcement utilizing an electrostatic adsorptive force of the glass substrates themselves or a vacuum adsorptive force, thereby integrating them.
For example, Patent Document 2 discloses a method for producing a display device, including adhering an end part of a substrate of a liquid crystal display device and an end part of a support with a glass frit-based adhesive and subsequently forming an electrode pattern or the like.
For example, Patent Document 3 discloses a method for producing a substrate, for a display device, including a step of irradiating the vicinity of end surfaces of at least periphery of two glass substrates with a laser light to fuse the two glass substrates.

For example, Patent Document 4 discloses a method for producing a liquid crystal display device including sticking a substrate to a substrate-conveying jig having a pressure-sensitive adhesive material layer provided on a support, successively performing liquid crystal display device element-forming treatments onto the substrate stuck on the substrate-conveying jig by conveying the substrate-conveying jig through production steps of the liquid crystal display device element, and peeling the substrate from the substrate-conveying jig after completion of predetermined steps.
For example, Patent Document 5 discloses a method for producing a liquid crystal display device element, including subjecting an electrode substrate for a liquid crystal display device element to a predetermined processing using a jig having an ultraviolet ray-curable pressure-sensitive adhesive on a support, subsequently lowering the pressure-sensitive adhesive force of the ultraviolet ray-curable pressure-sensitive adhesive by irradiating the ultraviolet ray-curable pressure-sensitive adhesive with an ultraviolet ray, and peeling the electrode substrate for a liquid crystal display device element from the jig,
For example, Patent Document 6 discloses a conveying method of temporarily fixing a thin plate to a supporting plate with a pressure-sensitive adhesive material, sealing a periphery of the pressure-sensitive adhesive material with a sealing material, and conveying the supporting plate having the thin plate temporarily fixed.

For example, Patent Document 7 discloses a thin glass laminate obtained by laminating a thin glass substrate and a supporting glass substrate, in which the thin glass and the supporting glass are laminated via a silicone resin layer having an easy-releasability and non-pressure-sensitive adhesiveness. Also, it is disclosed that it is sufficient to apply a force for withdrawing the thin glass substrate in a vertical direction from the supporting glass plate for the purpose of separating the thin glass substrate from the supporting glass substrate and it is possible to peel off the substrate more easily by making a cut to serve as a trigger for peeling at an end part with a razor's edge or the like or by injecting air into a laminate interface. Moreover, Patent Document 8 discloses previously laminating a protective glass substrate and a TFT array substrate using a silicone for release paper and peeling off the protective glass substrate after assembling a display device.

### CITATION LIST

### PATENT DOCUMENT

Patent Document 1: JP-A-2000-241804
Patent Document 2: JP-A-S58-54316
Patent Document 3: JP-A-2003-216068
Patent Document 4: JP-H8-86993
Patent Document 5: JP-H9-105896
Patent Document 6: JP-2000-252342
Patent Document 7: WO2007/018028
Patent Document 8: WO2008/007622

### SUMMARY OF THE INVENTION

### PROBLEMS TO BE SOLVED BY THE INVENTION

However, in the method of fixing the glass substrates each other utilizing an electrostatic adsorptive force or a vacuum adsorptive force as described in Patent Document 1, the method of fixing the both ends of the glass substrates using glass frit as described in Patent Document 2, and the method of fusing two glass substrates by irradiating the vicinity of end surfaces of periphery with a laser light as described in Patent Document 3, the glass substrates are brought in close contact with each other. That is, the glass substrates are laminated and brought in close contact without any other layer between them. Therefore, since a distortion defect is liable to occur in the glass substrates by foreign matter such as air bubbles and dust entrained between the glass substrates, it is difficult to obtain a glass substrate laminate having a smooth surface.

Moreover, in the methods of arranging a pressure-sensitive adhesive layer or the like between the glass substrates as described in Patent Documents 4 to 6, the occurrence of the distortion defect induced by the entrainment of the air bubbles and the like between the glass substrate as mentioned above can be avoided but the separation of the both glass substrates is difficult and there is a risk of damaging the thin glass substrate at the separation. Furthermore, the remaining of the pressure-sensitive adhesive on the thin glass substrate after separation also becomes a problem.

On the other hand, according to the thin glass laminate described in Patent Document 7, the distortion defect induced by the entrainment of the air bubbles and the like between the glass substrate as mentioned above hardly occurs. Moreover, it is also possible to peel the thin glass plate from the supporting glass plate. Furthermore, the problem of the remaining of the pressure-sensitive adhesive on the thin glass plate after separation is solved.
However, it is desired to perform the separation of both glass substrates more easily within shorter period of time. Particularly, in the case where the glass substrate is large, such separation becomes an important point for industrial utilization.

Moreover, in the thin glass plate as disclosed in Patent Document 7, at a thermal treatment under a high vacuum, there may be cases where a minute amount of a gas is generated from the silicone resin layer between the thin glass substrate and the supporting glass substrate. The gas may be generated even at the thermal treatment at such a relatively low temperature as about 100 to 350°C. The generation of the gas is not preferred since there is a possibility that facilities for the vacuum treatment step and the like may be stained.
Moreover, when the thermal treatment temperature is higher, for example, exceeds about 400°C, there may be cases where a part that is an end part of the silicone resin layer and is in contact with outside air is oxidized and deteriorated. In such a case, easy releasability from the thin glass substrate is lost and further there is a risk that the layer may be peeled from the supporting glass substrate. Moreover, there is a concern that the silicone resin layer is whitened through the oxidation to generate powdery SiO₂ and thereby facilities for the thermal treatment step may be stained. Furthermore, when the resin layer has been thus deteriorated, it becomes difficult to re-utilize the supporting glass substrate with the resin layer separated from the thin glass substrate, subsequently sticking it to another thin glass substrate as a support.

The present invention is accomplished in consideration of the problems as mentioned above. That is, an object is to provide a glass laminate capable of suppressing the occurrence of glass defects induced by foreign matter such as air bubbles and dust entrained between the glass substrates, capable of being treated in a current production line without generating etch pits, and capable of easily separating the closely contacted thin glass substrate from the resin layer.
Also, an object is to provide a glass laminate which suppresses the generation of a gas to an extremely minute amount at a thermal treatment under a high vacuum.
Moreover, an object is to provide a glass laminate in which the resin layer between the thin glass substrate and the supporting glass substrate is hardly oxidized and is hardly deteriorated even when the thermal treatment temperature is relatively high (on the order of more than 400°C).
Furthermore, an object is to provide a support attached-panel for a display device containing such a glass laminate. Also, an object is to provide a panel for a display device and a display device formed by using such a support attached-panel for a display device. Further, an object is to provide a method for producing the glass laminate or a method for producing the support attached-panel for a display device.

### MEANS FOR SOLVING THE PROBLEMS

With the aim of solving the aforementioned problems, the present inventors have conducted intensive studies and accomplished the invention.
The invention relates to the following (1) to (14).
(1) A glass laminate comprising:
   a thin glass substrate having a first main surface and a second main surface;
   a supporting glass substrate having a first main surface and a second main surface; and
   a resin layer and an outer frame layer arranged between the thin glass substrate and the supporting glass substrate,
   wherein the resin layer is fixed to the first main surface of the supporting glass substrate and is in close contact with the first main surface of the thin glass substrate, while having easy releasability from the first main surface of the thin glass substrate, and
   wherein the outer frame layer surrounds the resin layer on the first main surface of the supporting glass substrate so that the resin layer does not contact outside air.
(2) The glass laminate according to the above (I), wherein an end surface of the resin layer is in contact with at least a part of an end surface of the outer frame layer.
(3) The glass laminate according to the above (1) or (2), wherein the thin glass substrate is a glass substrate for a TFT array.
(4) The glass laminate according to any one of the above (1) to (3), wherein the outer frame layer comprises a material having 5% mass loss temperature upon heating of 400°C or higher.
(5) The glass laminate according to any one of the above (1) to (4), wherein the outer frame layer comprises at least one member selected from the group consisting of polyimide resins, silicone resins, and inorganic materials.
(6) The glass laminate according to any one of the above (1) to (5), wherein the resin layer comprises at least one member selected from the group consisting of acrylic-based resins, polyolefin-based resins, polyurethane resins, and silicone resins.
(7) The glass laminate according to any one of the above (1) to (6), wherein the outer frame layer has a width of 0.5 to 10 mm.
(8) A support attached-panel for a display device, comprising the glass laminate according to any one of the above (3) to (7) and further having a TFT array on the second main surface of the thin glass substrate.
(9) A panel for a display device, which is formed using the support attached-panel for a display device according to the above (8).
(10) A display device having the panel for a display device according to the above (9).
(11) A method for producing the glass laminate according to any one of the above (1) to (7), which comprises:
   a resin layer-forming step of forming and fixing the resin layer in an inner region on the first main surface of the supporting glass substrate,
   an outer frame layer-forming step of forming and fixing the outer frame layer in an outer region on the first main surface of the supporting glass substrate, and
   a closely-contacting step of closely contacting the first main surface of the thin glass substrate to the resin layer and the outer frame layer.
(12) A method for producing a support attached-panel for a display device,
   wherein the method for producing the glass laminate according to the above (11) further comprises a step of forming a member for a display device on the second main surface of the thin glass substrate in the obtained glass laminate.
(13) A method for producing a panel for a display device,
   wherein the producing method according to the above (12) further comprises a separation step of separating the thin glass substrate from the supporting glass substrate in the obtained support attached-panel for a display device.
(14) The method for producing a panel for a display device according to the above (13), wherein the separation step is a step of irradiating the outer frame layer with a laser light, thereby separating the thin glass substrate from the supporting glass substrate.

### ADVANTAGES OF THE INVENTION

According to the invention, it is possible to provide a glass laminate capable of suppressing the occurrence of glass defects induced by foreign matter such as air bubbles and dust entrained between the glass substrates, capable of being treated in a current production line without generating etch pits, and capable of easily separating closely contacted thin glass substrate from a resin layer.
Also, it is possible to provide a glass laminate which suppresses the generation of a gas to an extremely minute amount at a thermal treatment under a high vacuum.
Moreover, according to a preferred embodiment, it is possible to provide a glass laminate wherein the resin layer between the thin glass substrate and the supporting glass substrate is hardly oxidized and is hardly deteriorated even when the thermal treatment temperature is relatively high (on the order of more than 400°C).
Furthermore, it is possible to provide a support attached-panel for a display device containing such a glass laminate. Also, it is possible to provide a display device formed using such a support attached-panel for a display device. Further, it is possible to provide a method for producing the glass laminate or a method for producing the support attached-panel for a display device.

### BRIEF DESCRIPTION OF THE DRAWINGS

[Fig. 1] Fig. 1 is a schematic front view showing one embodiment of the laminate of the invention.
[fig. 2] Fig. 2 is a schematic cross-sectional view showing one embodiment of the laminate of the invention.
[Fig. 3] Fig. 3 is a schematic front view showing another embodiment of the laminate of the invention.
[Fig. 4] Fig. 4 is a schematic cross-sectional view showing another embodiment of the laminate of the invention.
[Fig. 5] Fig. 5 is a schematic cross-sectional view for explaining a method of peeling the supporting glass substrate of the laminate of the invention.

### BEST MODE FOR CARRYING OUT THE INVENTION

The present invention is explained.
The present invention is a glass laminate including a thin glass substrate having a first main surface and a second main surface, a supporting glass substrate having a first main surface and a second main surface, and a resin layer and an outer frame layer arranged between the thin glass substrate and the supporting glass substrate, in which the resin layer is fixed to the first main surface of the supporting glass substrate and is in close contact with the first main surface of the thin glass substrate, while having easy releasability from the first main surface of the thin glass substrate, and in which the outer frame layer surrounds the resin layer on the first main surface of the supporting glass substrate so that outside air does not come into contact with the resin layer.
Such a glass laminate is referred to as a "laminate of the invention".

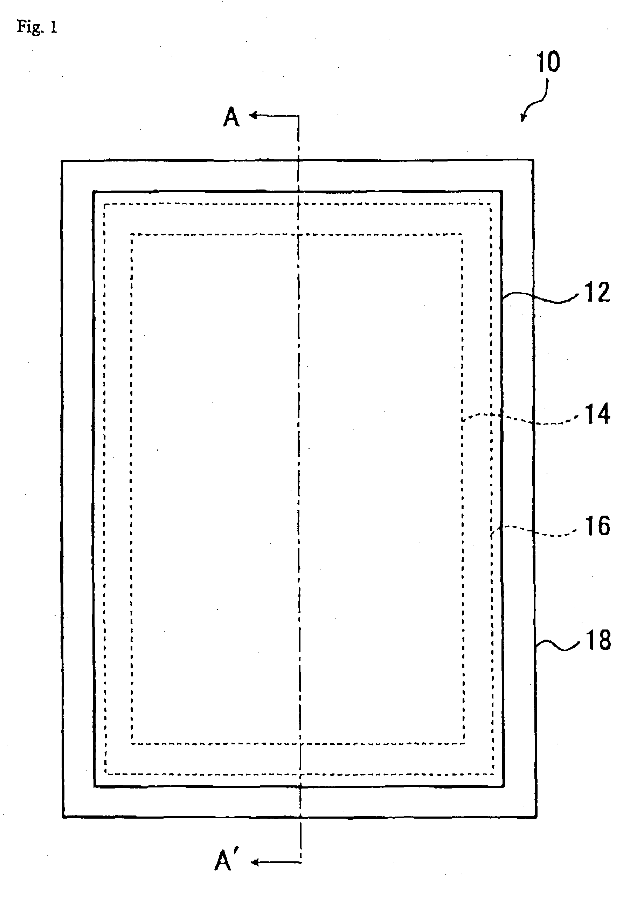

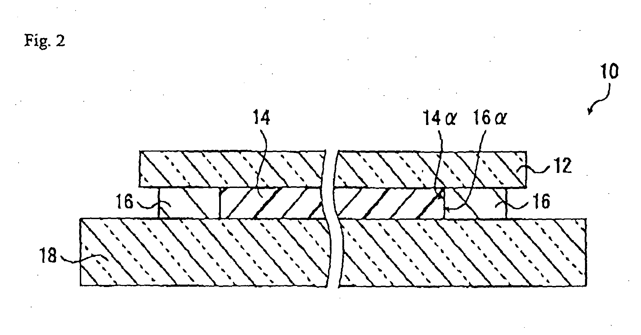

First, the form of the laminate of the invention is explained with reference to Fig. 1 and Fig. 2.
Fig. 1 is a schematic front view showing one embodiment of the laminate of the invention and Fig. 2 is an A-A' cross-sectional view (schematic cross-sectional view) thereof.
In the following, this embodiment is also referred to as "embodiment 1".
In the embodiment 1, a laminate 10 of the invention possesses a thin glass substrate 12, a resin layer 14, an outer frame layer 16, and a supporting glass substrate 18. As shown in Fig. 2, the thin glass substrate 12 and the supporting glass substrate 18 are laminated with sandwiching the resin layer 14 and the outer frame layer 16.
Moreover, as shown in Fig. 1, when seen from the front, the thin glass substrate 12, the resin layer 14, and the supporting glass substrate 18 are each rectangle and the area of main surface of the thin glass substrate 12 is larger than the area of main surface of the resin layer 14 but is slightly smaller than the area of main surface of the supporting glass substrate 18. When seen from the front, the thin glass substrate 12 is located so as to be contained inside the supporting glass substrate 18 and the resin layer 14 and the outer frame layer 16 are located so as to be contained in the inside of the thin glass substrate 12.

Moreover, as shown in Fig. 1, when seen from the front, the outer frame layer 16 is present in the vicinity of the outer edge (outer region) of the thin glass substrate 12 as a frame surrounding the outside of the resin layer 14. Furthermore, as shown in Fig. 2, the outer frame layer 16 is fixed to the first main surface of the thin glass substrate 12 and the first main surface of the supporting glass substrate 18. Therefore, the resin layer 14 present inside thereof is not in contact with outside air. In the case where the outer frame layer 16 is absent, an end surface 14α of the resin layer 14 comes into contact with outside air. Incidentally, when seen from the front, it is necessary that a TFT array or the like is formed inside the outer frame layer and that the TFT array or the like and the formed region of the outer frame layer are not seen with an overlap. In other words, when seen from the front, it is necessary to form the outer frame layer on the first main surface of the thin glass substrate corresponding to the region excluding an effective region where the TFT array or the like is formed in the second main surface of the thin glass substrate. The reason is to prevent the TFT array or the like from damaging by laser irradiation as mentioned later.

Moreover, in the laminate 10 of the invention, the resin layer 14 is fixed to the first main surface of the supporting glass substrate 18, possesses an easy releasability with respect to the first main surface that is one main surface of the thin glass substrate 12, and is in close contact with the first main surface of the thin glass substrate 12.

Moreover, in the laminate 10 according to the embodiment 1 of the invention, the end surface 14α of the resin layer 14 is in contact with an inside end surface 16α of the outer frame layer 16.

Such a glass laminate according to the embodiment 1 hardly generates a gas at the thermal treatment. This is because the gas generated from the resin layer 14 does not exhale to the outside since the outer frame layer 16 is present. Moreover, in the preferred embodiment to be mentioned below, the resin layer between the thin glass substrate and the supporting glass substrate is hardly oxidized and is hardly deteriorated even when the thermal treatment temperature is relatively high (on the order of more than 400°C). This is because the outer frame layer 16 blocks the contact of outside air with the end surface 14α of the resin layer 14.

The following will describe each of the thin glass substrate, the supporting glass substrate, the resin layer, and the outer frame layer possessed by the laminate of the invention.

The thin glass substrate will be described.
The thickness, shape, size, physical properties (thermal contraction rate, surface shape, chemical resistance, etc.), composition, and the like of the thin glass substrate are not particularly limited and, for example, may be the same as those of conventional glass substrates for display devices such as LCD and OLED.
The above thin glass substrate is preferably a glass substrate for a TFT array.

The thickness of the thin glass substrate is preferably less than 0.7 mm, more preferably 0.5 mm or less, further preferably 0.4 mm or less. Also, it is preferably 0.05 mm or more, more preferably 0.07 mm or more, further preferably 0.1 mm or more.

The shape of the thin glass is not limited but is preferably rectangle.

The size of the thin glass is not limited but, for example, in the case of rectangle, may be 100 to 2000 mm × 100 to 2000 mm, more preferably 500 to 1000 mm × 500 to 1000 mm.

In this regard, the thickness of the thin glass substrate is represented by an average value of values obtained by measuring 9 points in the surface using a laser focusing displacement meter, and the size means a value obtained by measuring each of the short side and the long side using a steel measure. The same shall apply to the thickness and the size of the supporting glass substrate to be mentioned below.

Even when the laminate of the invention has such thickness and size, the thin glass substrate can be easily peeled from the supporting glass substrate.

The properties such as the thermal contraction rate, surface shape, and chemical resistance of the thin glass substrate are also not particularly limited and vary depending on the kind of the display device to be manufactured.
Moreover, the thermal contraction rate of the thin glass substrate is preferably small. Specifically, it is preferred to use one having a linear expansion coefficient, which is an index of the thermal contraction rate, of 500 × 10⁻⁷/°C or less.
The above linear expansion coefficient is more preferably 300 × 10⁻⁷/°C or less, more preferably 200×10⁻⁷/°C or less, more preferably 100×10⁻⁷/°C or less, further preferably 45 × 10⁻⁷/°C or less. The reason is that a highly precise display device cannot be manufactured when the thermal contraction rate is large.
In this regard, in the invention, the linear expansion coefficient means one defined in JIS R3102 (1995).

The composition of the thin glass substrate may be the same as that of an alkali glass or a non-alkali glass. Of these, since the thermal contraction rate is small, a non-alkali glass is preferred.

The supporting glass substrate will be described.
The supporting glass substrate supports the thin glass substrate through the resin layer and reinforces the strength of the thin glass substrate.

The thickness, shape, size, physical properties (thermal contraction rate, surface shape, chemical resistance, etc.), composition, and the like of the supporting glass substrate are not particularly limited.
The thickness of the supporting glass substrate is not particularly limited but is preferably a thickness capable of being processed in a current production line.
For example, the thickness is preferably 0.1 to 1.1 mm, more preferably 0.3 to 0.8 mm, further preferably 0.4 to 0.7 mm.
For example, in the case where the current production line is designed so that a substrate having a thickness of 0.5 mm is processed and the thickness of the thin glass substrate is 0.1 mm, the sum of the thickness of the supporting glass substrate and the thickness of the resin layer is set to 0.4 mm. Moreover, it is most common for the current production line to be designed so that a glass substrate having a thickness of 0.7 mm is processed and, for example, when the thickness of the thin glass substrate is 0.4 mm, the sum of the thickness of the supporting glass substrate and the thickness of the resin layer is set to 0.3 mm.
The thickness of the supporting glass substrate is preferably larger than the thickness of the thin glass substrate.

The shape of the supporting glass substrate is not limited but is preferably rectangle.

The size of the supporting glass substrate is not limited but is preferably about the same as that of the thin glass substrate and is preferably slightly larger than that of the glass substrate (about 0.05 to 10 mm larger in each of the longitudinal direction and the transverse direction). The reason is that the end part of the thin glass substrate is easily protected from the contact with alignment devices such as positioning pins at the manufacture of a panel for a display, and that the peeling off the thin glass substrate from the supporting glass substrate can be more easily performed.

The linear expansion coefficient of the supporting glass substrate may be substantially the same as or different from that of the thin glass substrate. When it is substantially the same, it is preferred because warp hardly occurs on the thin glass substrate or the supporting glass substrate upon thermal treatment of the laminate of the invention.
A difference in linear expansion coefficient between the thin glass substrate and the supporting glass substrate is preferably 300×10⁻⁷/°C or less, more preferably 1 00x 10⁻⁷/°C or less, further preferably 50×10⁻⁷/°C or less.

The composition of the supporting glass substrate may be the same as that of, for example, an alkali glass or a non-alkali glass. Of these, since the thermal contraction rate is small, a non-alkali glass is preferred.

The resin layer will be described.
In the laminate of the invention, the resin layer is fixed to the first main surface of the supporting glass substrate.
The resin layer is in close contact with the first main surface of the thin glass substrate but can be easily peeled off. That is, the resin layer has easy releasability from the thin glass substrate.
In the laminate of the invention, it is considered that the resin layer and the thin glass substrate are not adhered by a pressure-sensitive adhesive force as possessed by a pressure-sensitive adhesive but are closely contacted by a force caused by von der Waals force between solid molecules, namely a close contact force.

The thickness of the resin layer is not particularly limited. The thickness is preferably 1 to 100 µm, more preferably 5 to 30 µm, further preferably 7 to 20 µm. This is because a sufficient close contact between the thin glass substrate and the resin layer is achieved when the thickness of the resin layer falls within such a range.
Also, this is because the occurrence of the deflection defect of the thin glass substrate can be suppressed even when air bubbles or foreign matters intervene. Moreover, when the thickness of the resin layer is too large, formation thereof requires much time and materials, so that the case is not economical.

The thickness of the resin layer means an average value of values obtained by measuring 9 points in the surface using a laser focusing displacement meter. The same shall apply to the thickness of the outer frame layer to be mentioned below.

Incidentally, the resin layer may comprise two or more layers. In that case, the "thickness of the resin layer" means total thickness of all the layers.
Moreover, in the case where the resin layer comprises two or more layers, the kind of the resin forming each layer may be different from each other.
The same shall apply to the outer frame layer to be mentioned later.

With regard to the resin layer, the surface tension of the surface of the resin layer with respect to the first main surface of the thin glass substrate is preferably 30 mN/m or less, more preferably 25 mN/m or less, further preferably 22 mN/m or less. This is because the resin layer can be more easily peeled from the thin glass substrate and also the close contact with the thin glass substrate becomes sufficient in the case of such surface tension.
Also, the resin layer is preferably composed of a material having a glass transition point of lower than room temperature (about 25°C) or having no glass transition point This is because the resin layer becomes a non-pressure-sensitive adhesive resin layer, has easier releasability, and can be more easily peeled from the thin glass substrate, and also the close contact with the thin glass substrate becomes sufficient.
Moreover, the resin layer preferably has thermal resistance. This is because, in the panel producing process of the invention, the glass laminate having the resin layer is subjected to a thermal treatment, for example, when a member for a display device is formed on the second main surface of the thin glass substrate.
Furthermore, when the elastic modulus of the resin layer is too high, the close contact property with the thin glass substrate decreases, so that the case is not preferred. Also, when the elastic modulus is too low, the easy releasability decreases, so that the case is not preferred.

The kind of the resin forming the resin layer is not particularly limited. For example, acrylic resins, polyolefin-based resins, polyurethane resins, and silicone resins may be mentioned. Two kinds of the resins may be mixed and used. Above all, silicone resins are preferred. This is because a silicone resin is excellent in thermal resistance and also is excellent in easy releasability with respect to the thin glass substrate. The silicone resin layer is preferred also from the view point that the easy releasability is hardly deteriorated even when treated at about 400°C for about 1 hour, for example. Moreover, since a silicone resin undergoes a condensation reaction with a silanol group of the surface of the supporting glass substrate, the silicone resin layer is easily fixed to the surface (first main surface) of the supporting glass substrate.

Moreover, the resin layer is preferably composed of a silicone for release paper among the silicone resins, and is preferably a cured product thereof. The silicone for release paper contains, as a main agent, a silicone containing linear dimethylpolysiloxane in the molecule. A resin layer formed by curing a composition containing this main agent and a crosslinking agent on the surface (first main surface) of the supporting glass substrate, by using a catalyst, a photopolymerization initiator or the like is preferred since it has an excellent easy releasability. Also, since the layer has a high flexibility, the occurrence of the deflection defect on the thin glass substrate can be suppressed even when foreign matter such as air bubbles and dust is entrained between the thin glass substrate and the resin layer, so that the layer is preferred.

Such a silicone for release paper is classified into a condensation reaction-type silicone, an addition reaction-type silicone, an ultraviolet ray-curable-type silicone, and an electron beam-curable-type silicone according to its curing mechanism but all of them can be used. Of these, the addition reaction-type silicone is preferred. This is because easiness of the curing reaction and a degree of easy releasability at the formation of the resin layer are fine and, also because thermal resistance is high.

Moreover, the silicone for release paper includes, morphologically, a solvent-type, an emulsion type, and a non-solvent-type, and all the forms are usable. Of these, the non-solvent-type is preferred. This is because productivity, safety, and environmental properties are excellent. Also, this is because air bubbles hardly remain in the resin layer since the silicone does not contain a solvent that may generate bubbles at the curing, i.e., at the heat curing, ultraviolet ray curing, or electron beam curing, when the resin layer is formed.

Moreover, as the silicone for release paper, specifically, there may be mentioned, as commercially available trade names or model numbers, KNS-320A and KS-847 (both being manufactured by Shin-Etsu Silicone Co., Ltd.), TPR6700 (manufactured by GE Toshiba Silicone Co., Ltd.), a combination of vinyl silicone "8500" (manufactured by Arakawa Chemical Industries, Ltd.) and methyl hydrogen polysiloxane "12031" (manufactured by Arakawa Chemical Industries, Ltd.), a combination of vinyl silicone "11364" (manufactured by Arakawa Chemical Industries, Ltd.) and methyl hydrogen polysiloxane "12031" (manufactured by Arakawa Chemical Industries, Ltd.), a combination of vinyl silicone "11365" (manufactured by Arakawa Chemical Industries, Ltd.) and methyl hydrogen polysiloxane "12031" (manufactured by Arakawa Chemical Industries, Ltd.), and the like.
In this regard, KNS-320A, KS-847, and TPR6700 are silicones containing a main agent and a crosslinking agent beforehand.

Moreover, the silicone resin forming the resin layer preferably has a nature that a component in the silicone resin layer hardly migrates to the thin glass substrate, i.e., a low silicone migration property.

The outer frame layer will be described.
The outer frame layer is band-shaped and is present between the thin glass substrate and the supporting glass substrate with being sandwiched by both the glass substrates. Also, on the supporting glass substrate, the outer frame layer is present as a frame surrounding the outside of the resin layer. Moreover, the outer frame layer is fixed to the thin glass substrate and the supporting glass substrate. Therefore, the resin layer hardly comes into contact with outside air. It is preferred to form the outer frame layer so that the resin layer does not completely contact outside air.
Incidentally, in the laminate 10 according to the embodiment 1 of the invention, the end surface 14α of the resin layer 14 contacts the inside end surface 16α of the outer frame layer 16, but they may not contact with each other and a gap may be present between the end surface of the resin layer and the inside end surface of the outer frame layer. However, the gap is preferably little or is preferably almost not present This is because the resin layer is more hardly oxidized in the case where the laminate of the invention is thermally treated at a relatively high temperature (more than 400°C).

The width of the outer frame layer is not particularly limited but is preferably 0.5 to 10 mm, more preferably 1 to 5 mm, further preferably 1.5 to 3.0 mm. When the layer has such a width, the resin layer is more hardly in contact with outside air. Moreover, peeling can be easily conducted at the time of peeling off the thin glass substrate from the supporting glass substrate. When the width of the outer frame layer is too wide, there is a risk that the peeling becomes difficult. For example, in the method of irradiation with a laser light, which is a preferable peeling method to be mentioned later, there arises a possibility that a long period of time may be required for the peeling.

The thickness of the outer frame layer is not particularly limited. The thickness may be the same as that of the resin layer but is preferably slightly larger than it, more preferably 5 to 20 µm larger than it. When the outer frame layer is slightly thicker than the resin layer, the thin glass substrate, the outer frame layer, and the supporting glass substrate are more easily closely contacted, so that the case is preferred. Moreover, when the thickness of the outer frame layer is too thick as compared with the thickness of the resin layer, the thin glass substrate, the resin layer, and the supporting glass substrate are difficult to bring them in close contact, and there is a risk that the thin glass substrate or the supporting glass substrate may be damaged in the process of producing the laminate of the invention.
In the case where the thickness of the resin layer is 5 to 100 µm, the thickness of the outer frame layer is preferably 5 to 120 µm, and it is more preferred that the outer frame layer is 5 to 20 µm thicker than the resin layer.

The material of the outer frame layer is not particularly limited but is preferably a material having a low mass decrease rate even when the laminate of the invention is subjected to a thermal treatment for forming a TFT array on the second main surface of the thin glass substrate. For example, the material is preferably a material having the mass loss rate of 5% by mass or less in the case where the laminate is thermally treated at 400°C. That is, the material is preferably a material whose 5% mass loss temperature upon heating is 400°C or higher. The temperature is more preferably 425°C or higher, further preferably 450°C or higher. When the material is such a material, a form change such as melting hardly occurs even when the laminate of the invention is subjected to a heating step, so that the case is preferred.
The 5% mass loss temperature upon heating means a temperature at which the mass of the sample reaches 95% of the initial mass of the sample when temperature is elevated at a rate of 10°C per minute under a mixed air flow.

Specific examples of the material of the outer frame layer include, for example, polyimide resins, silicone resins, and inorganic materials. The material may be a material obtained by mixing two or more thereof. The material is preferably a material that is at least one selected from the group consisting of polyimide resins, silicone resins, and inorganic materials and has a 5% mass loss temperature upon heating of 400°C or higher.

Here, as the silicone resins, a linear one, a ladder-type one, and a cage-type one may be exemplified. Of these, a ladder-like one or a cage-like one is preferred. This is because thermal resistance is high.
Moreover, the silicone resins may be a silicone resin having an alkyl group or an aryl group as a substituent and, since thermal resistance is high, a silicone resin whose silicon atom has an aryl group is preferred.

Furthermore, the inorganic material includes various oxides and nitrides. For example, they include oxides, nitrides, etc. of Al, Si, C, Mg, and B. Specifically, they include alumina, silica, graphite, magnesia, boron nitride, and aluminum nitride. The outer frame layer may be one containing it as a main agent, and further containing a silicate compound such as sodium metasilicate or potassium silicate or aluminum phosphate as a binder.

The outer frame layer may further contain an inorganic filler such as alumina, silica, talc, or glass fiber. The content thereof is preferably 5 to 80% by mass, more preferably 10 to 70% by mass, further preferably 20 to 50% by mass.

The laminate of the invention possesses the foregoing thin glass substrate, supporting glass substrate, resin layer, and outer frame layer.

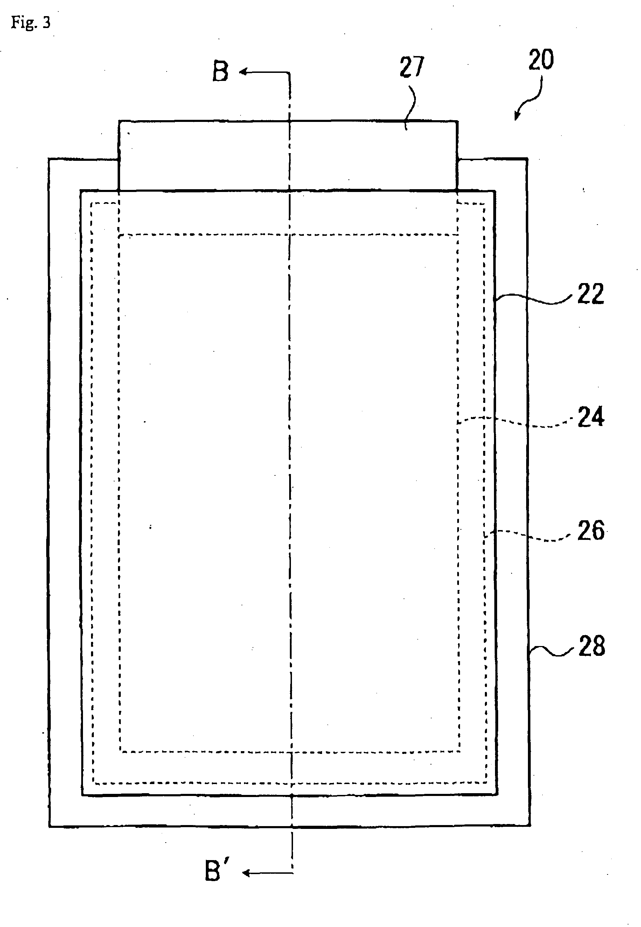

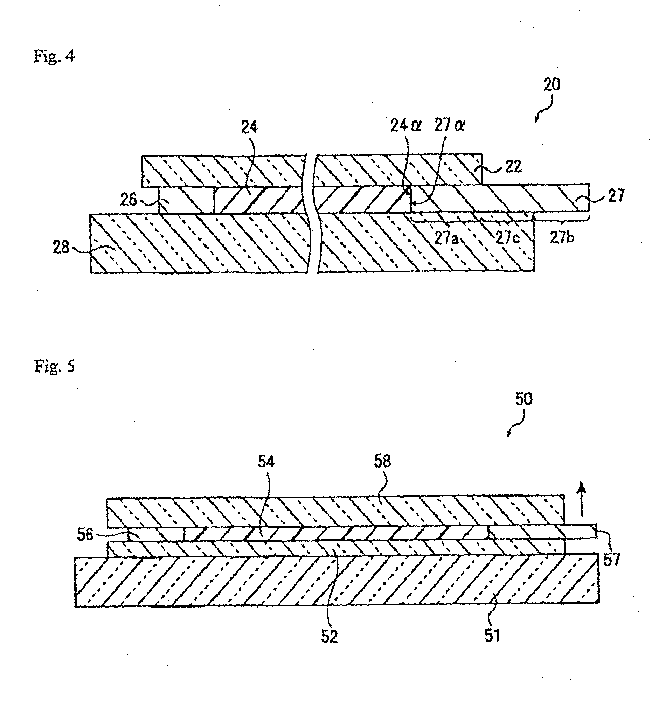

The laminate of the invention preferably further possesses a sheet. This is because the thin glass substrate can be easily peeled from the supporting glass substrate by drawing the sheet. A specific peeling method utilizing a sheet will be mentioned later.
The laminates according to the embodiments of the invention having a sheet will be described with reference to Fig. 3 and Fig. 4.
In the following, this type of embodiments is also referred to as "embodiment 2"_{,}
In this regard, as compared with the aforementioned embodiment 1, the laminate according to the embodiment 2 of the invention is different in that it has a sheet, and the other part is the same. Accordingly, in the following explanation, the different point will be mainly described.

Fig. 3 is a schematic front view showing another embodiment of the laminate of the invention. And Fig. 4 is a B-B' cross-sectional view (schematic cross-sectional view) thereof.
In the embodiment 2, a laminate 20 of the invention possesses a thin glass substrate 22, a resin layer 24, an outer frame layer 26, a sheet 27, and a supporting glass substrate 28. The thin glass substrate 22 and the supporting glass substrate 28 are laminated with sandwiching the resin layer 24, the outer frame layer 26, and the sheet 27.

Moreover, as shown in Fig. 3, when seen from the front, the thin glass substrate 22, the resin layer 24, and the supporting glass substrate 28 are each rectangle, and the sheet 27 is also rectangle. Moreover, the outside of the resin layer 24 is surrounded with the outer frame layer 26 and the sheet 27. Furthermore, the outer frame layer 26 is fixed to the thin glass substrate 22 and the supporting glass substrate 28. Also, the sheet 27 is in close contact with the thin glass substrate 22 and the supporting glass substrate 28. Therefore, the resin layer 24 present inside thereof is not in contact with outside air. In the case where the outer frame layer 26 or the sheet 27 is absent, the end surface 24α of the resin layer 24 comes into contact with outside air.

Moreover, as shown in Fig. 3, the sheet 27 is present at the position so that it is overlapped with one of four sides of the laminate 20 of the invention when seen from the front. As shown in Fig. 4, a part (27a) of the sheet 27 is sandwiched between the thin glass substrate 22 and the supporting glass substrate 28. Furthermore, the sheet has a part (27b) which is a part not sandwiched and is not in contact with the thin glass substrate 22 and also the supporting glass substrate 28. Furthermore, in the case of the embodiment 2 shown here, the sheet 27 has a part 27c which is not sandwiched between the thin glass substrate 22 and the supporting glass substrate 28 but is in contact with one substrate (supporting glass substrate 28).
Moreover, the sheet 26 is not overlapped with the resin layer 24, and they are arranged so that a part 24α of the end surface of the resin layer 24 is in contact with the end surface 27α of the sheet 27.

The laminate of the invention may be other embodiment that has such a sheet but is different from the embodiments. For example, the size of the sheet seen from the front may be smaller than that in Fig. 3. Moreover, the laminate may be an embodiment having a plurality of sheets. Furthermore, it may be one wherein the sheets are present at respective positions so that they are overlapped with two or more of four sides of the laminate of the invention.

The sheet will be described.
The sheet is present between the thin glass substrate and the supporting glass substrate, and a part thereof is sandwiched with both glass substrates. At least a part of non-sandwiched part (remaining part) is also not in contact with the thin glass substrate and the supporting glass substrate.

The shape of the sheet is not particularly limited but is preferably rectangle as in the above embodiment 2.
The size and the surface area (area of one main surface of the two main surfaces) of the sheet are also not particularly limited.
For example, in the case of rectangle, the size of one sheet may be 1 to 4000 cm², preferably 2 to 2000 cm², more preferably 4 to 1000 cm².

The size of the part of the sheet sandwiched with the thin glass substrate and the supporting glass substrate is not particularly limited. For example, in the case where the part is rectangle, the size may be 10 to 2000 mm × 0.5 to 100 mm, preferably 20 to 1000 mm × 0.5 to 100 mm, more particularly 20 to 1000 mm × 1 to 50 mm. Particularly, of the four sides when the part in the sheet is seen from the front, the length (length of the part represented by "27a" in the case of the embodiment 2) of the side orthogonal to the side of the laminate of the invention (side parallel to the cross section shown in Fig. 4 in the above embodiment 2) may be 10 to 2000 mm, preferably 20 to 1000 mm, more preferably 40 to 1000 mm. Also, the area of the part may be 0.5 to 2000 cm², preferably 1 to 1000 cm², more preferably 2 to 500 cm². In the case where a member for a display device is formed on the second main surface of the thin glass substrate, such a range is preferred in the point that the area of a part suitable for the formation thereof can be set relatively large in the thin glass substrate.
In this regard, the "size of the part sandwiched" with regard to the sheet means, for example, in the case of the above embodiment 2, of the two main surfaces possessed by the part 27a, the area of the main surface on the side facing to the supporting glass substrate.

The size of a portion of a part (remaining part) of the sheet, which part is not sandwiched with the thin glass substrate and the supporting glass substrate and which portion is not in contact with either the thin glass substrate or the supporting glass substrate, is not particularly limited. For example, in the case where the part is rectangle, the size may be 10 to 2000 mm × 0.5 to 100 mm, preferably 20 to 1000 mm × 0.5 to 100 mm, more particularly 20 to 1000 mm × 1 to 50 mm. Particularly, of the sides of the rectangular sheet, the length (length of the part represented by "27b" in the case of the embodiment 2) of the side orthogonal to the side of the laminate of the invention (for example, side parallel to the cross section shown in Fig. 4 in the above embodiment 2) may be 10 to 2000 mm, preferably 20 to 1000 mm, more preferably 40 to 1000 mm.
Also, the area may be 0.5 to 2000 cm², preferably 1 to 1000 cm², more preferably 2 to 500 cm². Such a range is preferred in the point of not being an obstacle at the formation of a display member for a display device is formed on the second main surface of the thin glass substrate.
In this regard, "a portion of a part (remaining part), which part is not sandwiched and which portion is not in contact with either the thin glass substrate or the supporting glass substrate" with regard to the sheet means, for example, in the case of the above embodiment 2, of the two main surfaces possessed by the part 27b, the area of the main surface on the side in contact with the first main surface of the supporting glass substrate 28 at the end part

The size of a portion of a part of the sheet, which part is not sandwiched with the thin glass substrate and the supporting glass substrate and which portion is in contact with the thin glass substrate or the supporting glass substrate, is not particularly limited. For example, the size may be 0 to 2000 cm², preferably 0 to 1000 cm², more preferably 0 to 500 cm². Such a range is necessarily determined by the difference in size between the thin glass substrate and the supporting glass substrate and the site on which the sheet is placed.
In this regard, "a portion of a part which part is not sandwiched and which portion is in contact with the thin glass substrate or the supporting glass substrate" with regard to the sheet means, for example, in the case of the above embodiment 2, of the two main surfaces possessed by the part 27c, the area of the main surface on the side in contact with the first main surface of the supporting glass substrate 28.

The sheet is preferably fixed to the first main surface of the supporting glass substrate. Moreover, the "part of the sheet sandwiched with the thin glass substrate and the supporting glass substrate" described in the above is preferably fixed to the first main surface of the supporting glass substrate. This is because the peeling off the thin glass substrate from the supporting glass substrate becomes easier.
A method of fixing the sheet to the first main surface of the supporting glass substrate is not limited. It may be a method in which the sheet is not easily peeled off. For example, the fixing can be achieved using an adhesive or a sticking agent. As the adhesive, adhesives such as urethane-based, acrylic, epoxy-based, and silicone-based ones are mentioned. Moreover, the adhesive may be an inorganic adhesive. Of these, an epoxy-based, acrylic, or silicone-based adhesive or an inorganic adhesive is preferred. This is because they exhibit a high thermal resistance.

The thickness of the sheet is not particularly limited. The thickness may be the same as that of the resin layer but the sheet is preferably slightly thicker than the layer, more preferably 5 to 20 µm thicker that it. When the sheet is slightly thicker than the resin layer, the thin glass substrate, the sheet, and the supporting glass substrate are easily closely contacted, so that the case is preferred Moreover, when the thickness of the sheet is exceedingly larger than the thickness of the resin layer, the thin glass substrate, the resin layer, and the supporting glass substrate become difficult to bring them in close contact and, in the process of producing the laminate of the invention, there is a risk of damaging the thin glass substrate or the supporting glass substrate.
When the thickness of the resin layer is 5 to 100 µm, the thickness of the sheet is preferably 5 to 120 µm and the sheet is more preferably 5 to 20 µm thicker than the resin layer.

The material of the sheet is not particularly limited but the sheet is preferably composed of an organic resin or a metal.
Moreover, among the organic resins, an organic resin whose 5% mass loss temperature upon heating is 200°C or higher is preferred. The temperature is more preferably 250°C or higher, further preferably 300°C or higher. This is because a form change such as melting hardly occurs even when the laminate of the invention is subjected to a heating step.

The organic resin whose 5% mass loss temperature upon heating is 200°C or higher includes polysulfones, polyether sulfones, polyphenylene sulfides, polyamide imides, polyether imides, polyether ether ketones, polyimides, polyallyl esters, polycarbonates, and fluorine resins such as polytetrafluoroethylene.
The sheet is preferably a film made of the organic resin whose 5% mass loss temperature upon heating is 200°C or higher.

The sheet may be composed of only the resin as mentioned above but may further contain an inorganic filler such as alumina, silica, talc, or glass fiber. The content thereof is preferably 5 to 80% by mass, more preferably 10 to 70% by mass, further preferably 20 to 50% by mass.

In the case where the material of the sheet is a metal, in particular, aluminum, gold, copper, or stainless steel is preferred. This is because thermal resistance is high.

Thus, the laminate of the invention possesses the thin glass substrate, the supporting glass substrate, the resin layer, and the outer frame layer and may further possess the sheet.

The following will describe a support attached-panel for a display device of the invention.
The support attached-panel for a display device of the invention comprises the glass laminate of the invention and further has a member for a display device on the second main surface of the thin glass substrate.
The support attached-panel for a display device can be obtained by forming the member for a display device on the second main surface of the thin glass substrate in the laminate of the invention.

The member for a display device means various circuit patterns and the like such as a light-emitting layer, a protective layer, a color filter, a liquid crystal, and a transparent electrode composed of ITO possessed by the glass substrate for conventional display devices such as LCD and OLED on the surface.
The support attached-panel for a display device of the invention is preferably one wherein a TFT array (hereinafter simply referred to as an "array") is formed on the second main surface of the thin glass substrate of the laminate of the invention.
The support attached-panel for a display device of the invention also includes, for example, one obtained by further sticking the other glass substrate (e.g., a glass substrate having a thickness of 0.3 mm or more) having a color filter formed thereon to the support attached-panel for a display device of the invention wherein the array is formed on the second main surface of the thin glass substrate.

Moreover, a panel for a display device can be obtained from such a support attached-panel for a display device. By the method to be mentioned later, a panel for a display device having the member for a display device and the thin glass substrate can be obtained by peeling the thin glass substrate from the resin layer fixed to the supporting glass substrate.

Furthermore, a display device can be obtained from such a panel for a display device. As the display device, LCD and OLED are mentioned. As LCD, TN type, STN type, FE type, TFT type, and MIM type are mentioned.

The following will describe the method for producing the laminate of the invention.
The method for producing the laminate of the invention is not particularly limited but is preferably a method for producing the glass laminate, which comprises: a resin layer-forming step of forming and fixing the resin layer in an inner region on the first main surface of the supporting glass substrate; an outer frame layer-forming step of forming and fixing the outer frame layer in an outer region on the first main surface of the supporting glass substrate; and a close contact step of bringing the first main surface of the thin glass substrate in close contact with the resin layer and the outer frame layer. Such a production method is hereinafter also referred to as a "production method of the invention".

The resin layer-forming step will be described.
First, the thin glass substrate and the supporting glass substrate are prepared.
The methods for producing the thin glass substrate and the supporting glass substrate are not particularly limited. For example, they can be produced by a conventionally known method. For example, after conventionally known glass materials are dissolved to form a molten glass, they can be obtained by forming into a plate-shape by a float method, a fusion method, a down draw method, a slot down method, a re-draw method, or the like.

A resin layer is formed in the inner region of the surface (first main surface) of the supporting glass substrate thus produced. Here, the inner region means a region that is on the first main surface of the supporting glass substrate and is inner region of the outer region to be described later.
For example, a method of adhering a film resin to the surface of the supporting glass substrate is mentioned. Specifically, in order to impart a high adhesive strength onto a surface of the film, a method of performing a surface-modifying treatment (priming treatment) and adhering it to the first main surface of the supporting glass substrate is mentioned. For example, there may be exemplified a chemical method (primer treatment) of chemically improving the close adhesion strength such as a silane coupling agent, a physical method of increasing the surface active group such as a flame treatment, a mechanical treatment method of increasing anchors by increasing surface roughness such as a sand blast treatment, and the like.

Moreover, there may be mentioned, for example, a method of coating the first main surface of the supporting glass substrate with a resin composition that provides the resin layer by a known method. The known method includes a spray coating method, a die coating method, a spin coating methods, a dip coating method, a roll coating method, a bar coating method, a screen-printing method, and a gravure coating method. Among such methods, an appropriate method can be selected depending on the kind of the resin composition.
For example, in the case where the non-solvent type silicone for release paper is used as a resin composition, a die coating method, a spin coating method, or a screen-printing method is preferred.

Furthermore, in the case where the first main surface of the supporting glass substrate is coated with the resin composition, the coating amount is preferably 1 to 100 g/m², more preferably 5 to 20 g/m².

For example, in the case where a resin layer composed of an addition reaction type silicone is formed, the supporting glass substrate is coated with a resin composition containing a silicone (main agent) containing a linear dimethylpolysiloxane in the molecule, a crosslinking agent, and a catalyst, by a known method such as the above spray coating method, which is followed by heat curing. The heat curing conditions vary depending on the blending amount of the catalyst and, for example, in the case where a platinum-based catalyst is blended in an amount of 2 parts by mass based on 100 parts by mass of the total of the main agent and the crosslinking agent, the reaction is performed at 50°C to 250°C, preferably 100°C to 200°C in atmospheric air. Moreover, the reaction time in this case is 5 to 60 minutes, preferably 10 to 30 minutes. In order to form a silicone resin layer having a low silicone migration property, it is preferred to let the curing reaction proceed as far as possible so that the unreacted silicone component does not remain. The reaction temperature and the reaction time as mentioned above are preferred since it is possible not to let the unreacted silicone component remain in the silicone resin layer. In the case where the reaction time is exceedingly longer than that mentioned above or the reaction temperature is higher than that mentioned above, there is a possibility that oxidative decomposition of the silicone resin simultaneously occurs to form low-molecular-weight silicone components and the silicone migration property becomes high. The proceeding of the curing reaction as far as possible so that the unreacted silicone component does not remain in the silicone resin layer is also preferred for improving the releasability after the heating treatment.

Moreover, for example, in the case where the resin layer is produced using the silicone for release paper, after the silicone resin layer is formed by heat curing the silicone for release paper applied on the supporting glass substrate, the thin glass substrate is laminated on the silicone resin-formed surface of the supporting glass substrate. By heat curing the silicone for release paper, the silicone resin-cured product is chemically bonded to the surface of the supporting glass substrate. Furthermore, the silicone resin layer is bonded to the surface of the supporting glass substrate by an anchor effect. By these functions, the silicone resin layer is strongly fixed to the supporting glass substrate.

The outer frame layer-forming step will be described.
After the formation of the resin layer on the first main surface of the supporting glass substrate by the resin layer-forming step as mentioned above, or before the formation, or during the formation of the resin layer, the outer frame layer is formed on and fixed to the outer region of the first main surface of the supporting glass substrate.

Here, the outer region is a region that is present on the first main surface of the supporting glass substrate and contained in the inside more than the outer edge of the thin glass substrate when the laminate of the invention is seen from the front (for example, in the case as shown in Fig. 1), and means a region in the vicinity of the outer edge of the thin glass substrate. Specifically, the outer region is, for example, a region that is 0.5 to 100 mm, preferably 0.5 to 50 mm, more preferably 0.5 to 10 mm, further preferably 0.5 to 5 mm inside from the edge of the thin glass substrate when seen from the front When the thin glass substrate is large one, the size of the region may be large.

In the outer frame layer-forming step, as a method of forming the outer frame layer on the first main surface of the supporting glass substrate, the following methods are mentioned.
(a) A method of forming the outer frame layer by injecting the material with moving a dispenser along the outer periphery of the resin layer.
(b) A method of forming the outer frame layer, while fixing a dispenser, by injecting the material from the dispenser with moving the supporting glass substrate along the outer periphery of the resin layer.
(c) A method of forming the outer frame layer by screen-printing using a screen having a transferring part having the same shape as the shape of the outer periphery of the resin layer.
(d) A method of forming the outer frame layer by bringing the thin glass substrate in close contact with the supporting glass substrate through the resin layer to form a glass laminate, and then injecting the material from the outer periphery of the glass laminate by a capillary phenomenon under normal pressure or under vacuum.
(e) A method of forming the outer frame layer by bringing the thin glass substrate in close contact with the supporting glass substrate through the resin layer to form a glass laminate and then covering an exposed portion of the resin layer by vapor deposition, sputtering, chemical vapor-phase growth, or the like.
(f) A method of forming the resin layer on the supporting glass substrate and then forming the outer frame layer at the end part of the resin layer by vapor deposition, sputtering, chemical vapor-phase growth, or the like.

For example, in the case where an outer frame layer composed of a polyimide resin is formed, the outer frame layer can be obtained by coating the supporting glass substrate with a varnish of a polyamic acid that is a precursor thereof by a known method such as the above-mentioned screen-printing method and then heat curing the varnish.

The close contact step will be described.
The resin layer is formed on the first main surface of the outer frame layer by the method as mentioned above and the thin glass substrate is laminated on the surface of the resin layer.
The thin glass substrate and the resin layer are in close contact with the resin layer by a force caused by von der Waals force between very close, opposing solid molecule, namely a close contact force. In this case, the supporting glass substrate and the thin glass substrate can be maintained in a laminated state.

A method for laminating the thin glass substrate on the surface of the resin layer fixed to the supporting glass substrate is not particularly limited. For example, the lamination can be performed using a known method. For example, there may be mentioned a method of bonding the resin layer with the thin glass substrate under pressure using a roll or a press after the thin glass substrate is superposed on the surface of the resin layer under normal-pressure environment, Since the resin layer and the thin glass substrate are more closely contacted by pressure-bonding with the roll or press, the method is preferred. Moreover, since the air bubbles entrained between the resin layer and the thin glass substrate are easily removed owing to the pressure-bonding with the roll or press, the method is preferred.
When the pressure-bonding is performed by a vacuum lamination method or a vacuum press method, suppression of the entrainment of the air bubbles and achievement of good close contact are more preferably performed, so that the method is more preferred. Owing to the pressure-bonding under vacuum, there is also an advantage that the air bubbles are not grown by heating even when minute air bubbles remain, and thus the distortion defects of the thin glass substrate are hardly brought about

Moreover, by such a close contact step, the outer frame layer and the thin glass substrate can be brought in close contact. For example, in the case where an outer frame layer composed of an inorganic material is formed in the above outer frame layer-forming step, after the outer frame layer is formed, it is preferred to bring it in close contact with the thin glass substrate immediately.
This is because the close contact of the first main surface of the thin glass substrate and the outer frame layer becomes stronger, and the outer frame layer can be more strongly fixed to the first main surface of the thin glass substrate.
Furthermore, for example, after the outer frame layer is formed, the outer frame layer may be fixed by applying, for example, an adhesive or the like on the surface of the outer frame layer with which the first main surface of the thin glass substrate is close contact, and then bringing it in close contact with the thin glass substrate.

At the close contact of the thin glass substrate to the surface of the resin layer, it is preferred that the surface of the thin glass substrate is sufficiently cleaned and the lamination is performed under a high degree of cleanness. Even when foreign matter is entrained between the resin layer and the thin glass substrate, the flatness of the surface of the thin glass substrate is not affected since the resin layer deforms. However, the flatness becomes better as the degree of cleanness increases, so that the lamination is preferred.

In the case where the aforementioned laminate according to the embodiment 2 of the invention having the sheet is formed, at the stage before the above close contact step, there is possessed a sheet-fixing step of fixing a part of the sheet on the first main surface of the supporting glass substrate and/or the surface of the above resin layer.
A method for attaching the sheet includes, for example, a method of adhering the sheet to the surface of the supporting glass substrate. Specifically, there may be mentioned a method of performing a surface-modifying treatment for imparting a high adhesive strength to the surface of the sheet and adhering it to the first main surface of the supporting glass substrate.

The laminate of the invention can be thus produced.

The following will describe the method for producing the support attached-panel for a display device of the invention.
The method for producing the support attached-panel for a display device of the invention possesses a step of forming a member for a display device on the second main surface of the thin glass substrate in the laminate of the invention.
Specifically, the member for a display device is, for example, formed on the second main surface of the thin glass substrate in the laminate of the invention produced as above.
The member for a display device is not particularly limited. For example, there may be mentioned an array and a color filter possessed by LCD. Moreover, there may be mentioned a transparent electrode, a hole-injecting layer, a hole-transporting layer, a light-emitting layer, and an electron-transporting layer possessed by OLED.

A method for forming such a member for a display device is also not particularly limited and may be the same as a conventionally known method.
For example, in the case where TFT-LCD is produced as a display device, the method may be the same as various steps such as a step of forming an array on a conventionally known glass substrate, a step of forming a color filter, and a step of sticking a glass substrate on which an array has been formed to a glass substrate on which a color filter has been formed (step of sticking the array and the color filter). More specifically, treatments to be performed in these steps include, for example, cleaning with pure water, drying, film formation, resist application, exposure, development, etching, and resist removal. In addition, as steps to be performed after the step of sticking the array and the color filter is performed, there are a liquid crystal-injecting step and an inlet-sealing step to be performed after performing the injection treatment, so that treatments performed in these steps may be mentioned.

Moreover, when the case where OLED is manufactured is considered as an example, steps for forming an organic EL structure on the second main surface of the thin glass substrate includes various steps such as: a step of forming a transparent electrode; steps of vapor deposition of a hole-injecting layer, a hole-transporting layer, a light-emitting layer, an electron-transporting layer, and the like; and a sealing step, and treatments performed in these steps, specifically, include, for example, a film-forming treatment, a vapor deposition treatment, an adhesion treatment of a sealing plate.

The support attached-laminate of the invention can be thus produced.

The following will describe the method for producing the panel for a display device of the invention.
The panel for a display device of the invention possesses a separation step of separating the thin glass substrate from the supporting glass substrate in the support attached-panel for a display device obtained by the producing method as mentioned above.

The method of separating the thin glass substrate from the supporting glass substrate is not particularly limited.
For example, it is sufficient to impart a force to separate the thin glass substrate from the supporting glass substrate in a vertical direction, and it is possible to perform the peeling by making a peeling-start at an end part with a razor's edge or the like or by blowing the end part of the laminate of the invention with a fluid such as air. Moreover, it is also preferred to perform the peeling by irradiating the above outer edge with a laser light Furthermore, in the case of the embodiment 2 where the laminate of the invention has the above sheet, the peeling can be easily conducted by drawing the sheet
The following will describe the peeling method of irradiation with laser light and the peeling method of drawing the sheet.

The method of irradiating the outer frame layer with a laser light and separating the thin glass substrate from the supporting glass substrate is preferred since the peeling can be easily achieved.
When the above outer frame layer is melted or oxidized and decomposed by irradiating the outer frame layer with a laser light through the thin glass substrate and/or the supporting glass substrate (preferably through the supporting glass substrate), the adhesive strength between the thin glass substrate and the supporting glass substrate is weakened, so that both glass substrates can be easily peeled off each other. The application of the above method of using a razor or method of blowing with a fluid after the irradiation with a laser light is preferred since the peeling can be more easily conducted.
The laser light is preferably a laser light that exhibits a high transmitting property in the thin glass substrate or the supporting glass substrate and is easily absorbed into the outer frame layer. For example, there may be mentioned a laser light such as a fundamental wave (1064 nm) of YAG or YVO₄ laser or a half-frequency wave (532 nm) thereof, a semiconductor diode laser (e,g., 650 to 905 nm in the case of AlGaAs), a Ti-doped sapphire laser (660 to 986 nm), an He-Ne laser (543 to 633 nm), various excimer lasers and the like.

The laser light can be irradiated to the outer frame layer by, for example, using a laser irradiation apparatus through the thin glass substrate and/or the supporting glass substrate (preferably through the supporting glass substrate). Then, owing to oxidation and decomposition of the outer frame layer or breakage by the generation of strain of thermal stress, the adhesive strength between the thin glass substrate and the supporting glass substrate is weakened. Accordingly, both glass substrates can be easily peeled off.

Here, when the outer frame layer is destroyed by the irradiation with the laser light, there is a case where a residue of the outer frame layer is generated.
In this case, the residue can be removed by a treatment with a chemical liquid such as an organic solvent, an acid or an alkali, or a scrub cleaning treatment after peeling.

In the case of the embodiment 2 having the above sheet, the thin glass substrate can be separated from the supporting glass substrate by drawing the above remaining part (part not sandwiched with both glass substrates) of the sheet in the support attached-panel for a display device. A specific peeling method will be described with reference to Fig. 5.
In Fig. 5, the laminate is placed on a horizontal platen 51 so that the thin glass substrate 52 comes down and the supporting glass substrate 58 comes up, the second main surface of the thin glass substrate 52 is vacuum-contacted onto the platen 51 in a flat state, and the sheet 57 is drawn upward as shown in Fig. 7 to lift up the supporting glass substrate 58. Then, a gap is generated at the interface between the thin glass substrate 52 and the resin layer 54 and, from the gap as a starting point, the peeling proceeds through invasion of an air layer into the interface. Blowing with air toward the gap is more preferred since the peeling phenomenon in the interface is more liable to proceed.

The panel for a display device of the invention can be obtained by peeling the support part of the laminate with the support of the invention by such a method and, if necessary, further performing a processing.

### Examples

### Example 1

About the same glass laminate as the glass laminate according to the embodiment 1 described with reference to the aforementioned Fig. 1 and Fig. 2 was produced by the following method. A difference from the embodiment 1 lies only in sizes of the thin glass substrate and the supporting glass substrate. In the glass laminate according to the embodiment 1, the thin glass substrate 12 is smaller in main surface area than the supporting glass substrate 18 but, in the glass laminate to be produced in Example 1, the sizes of both glass substrates are the same.

First, a supporting glass substrate having a length of 720 mm, a width of 600 mm, a thickness of 0.4 mm, and a linear expansion coefficient of 38 × 10⁻⁷/°C (manufactured by Asahi Glass Co., Ltd., AN100) was subjected to cleaning with pure water and UV cleaning to clean the surface.
Next, a mixture of 100 parts by mass of a non-solvent addition reaction-type silicone for release paper (manufactured by Shin-Etsu Silicone Co., Ltd., KNS-320A (viscosity: 0.40 Pa-s)) and 2 parts by mass of a platinum-based catalyst (manufactured by Shin-Etsu Silicone Co., Ltd., CAT-PL-56) was applied to an inner region on the supporting glass substrate in a size of a length of 710 mm and a width of 590 mm by using a screen printer (coated amount: 30 g/m²). The inner region was regarded as a region capable of affording an outer region evenly having a width of 5 mm on whole outer periphery.
Then, the mixture was heat-cured at 180°C for 30 minute in atmospheric air to obtain a silicone resin layer having a thickness of 20 µm.
Next, a polyamic acid solution ("U-Vamish-S" manufactured by Ube Industries, Ltd., 18% by mass, an N-methyl-2-pyrrolidone solution) that is a precursor of a polyimide was printed on the whole aforementioned outer region having a width of 5 mm by screen-printing. The polyamic acid solution was printed so as to come into contact with the end part of the silicone resin layer formed on the inner region. In this regard, the WET thickness of the polyamic acid solution was 160 µm. Then, the solution was heated at 300°C for 60 minutes in atmospheric air to form an outer frame layer composed of a polyimide. The thickness of the outer frame layer was 20 µm. In this regard, the silicone resin layer formed on the inner region was not at all changed upon the heating.
Next, a first main surface (surface to be attached to the silicone resin layer later) of a thin glass substrate having a length of 720 mm, a width of 600 mm, a thickness of 0.3 mm, and a linear expansion coefficient of 38×10⁻⁷/°C (manufactured by Asahi Glass Co., Ltd., AN100) was subjected to cleaning with pure water and UV cleaning to clean the surface. Then, a surface of the silicone resin layer of the supporting glass substrate and the thin glass substrate were stuck each other at room temperature by a vacuum press to obtain a glass laminate.
Two sheets of a "glass laminate A" that is one embodiment of the laminate of the invention were thus produced.

Next, one of the two sheets of the glass laminate A was subjected to a heating treatment at 450°C for 1 hour in atmospheric air. In this regard, the glass laminate A was separately heated from room temperature to 450°C under a high vacuum (1.0×10⁻⁵ Pa) but no gas was generated from the glass laminate A. The one after subjected to the heating treatment in atmospheric air was referred to as a "glass laminate A-2". Here, another glass laminate A not subjected to the heating treatment was referred to as a "glass laminate A-1".

Next, the glass laminate A-1 and the glass laminate A-2 were subjected to the following peeling test 1, and releasability was evaluated.

### <Peeling Test 1>

The glass laminate was placed on a platen so that the supporting glass substrate came up and the thin glass substrate came down, and the thin glass substrate was vacuum-contacted onto the platen.
Next, in this state, the outer frame layer was irradiated with YVO₄ laser light from the above through the supporting glass substrate. Then, the entire outer frame layer was destroyed through carbonization. For the irradiation with the laser light, a Q-switch YVO₄ laser apparatus manufactured by LASERTEC Company was used. Moreover, the laser light irradiation conditions were as follows: wavelength: 1064 nm, output: 1 W, spot diameter: 30 µm, frequency: 50 kHz, scanning rate: 250 mm/s, scanning: 3 times. Namely, the laser light was moved in the width direction of the outer frame layer with performing spot irradiation, thereby reciprocating the laser light 1.5 times on the same portion in the width direction. Thereafter, the laser light irradiation position was moved by an one-time irradiation spot diameter (30 µm) in the direction vertical to the width direction (i.e., in the longitudinal direction of the outer frame layer) and the laser light irradiation position was moved so that the laser light is again reciprocated 1.5 times on the same portion in the width direction. Then, the entire outer frame layer was irradiated with the laser light by repeating the operations.
Next, with maintaining the state where the thin glass substrate of the glass laminate was vacuum-suctioned on the platen, the supporting glass substrate was drawn vertically upward, using a gap between the supporting glass substrate and the thin glass substrate formed by destroying the outer flame layer as a trigger.

When such peeling test 1 was performed on each of the glass laminate A-1 and the glass laminate A-2, the glass laminates were each such that an air layer was formed from the end into the interface between the silicone resin layer and the thin glass substrate, the air layer expanded, and thus the supporting glass substrate with the silicone resin layer and the thin glass substrate could be easily peeled off. Moreover, a residue of the outer frame layer attached to the surface of the thin glass substrate after peeling could be also removed by scrub cleaning using an alcohol. Also, the end part of the silicone resin layer of the glass laminate A-2 had not been oxidized.

### Example 2

Two sheets of a glass laminate were produced by performing the same operations as in Example 1 except that a thermoplastic polyimide resin (manufactured by Mitsui Chemicals Inc., AURUM PLC 450C (5% mass loss temperature upon heating = 570°C)) was used and, after melting, the outer frame layer was formed by an extrusion dispense method. Then, a "glass laminate B-1" not subjected to the heating treatment and a "glass laminate B-2" subjected to the heating treatment were obtained in a similar manner to the case of Example 1. In this regard, the glass laminate B was separately heated from room temperature to 450°C under a high vacuum (1.0× 10⁻⁵ Pa) but no gas was generated from the glass laminate B. In the glass laminate B-1 and the glass laminate B-2 obtained, the thin glass substrate had been in close contact with the silicone resin layer without having air bubbles and was also satisfactory in smoothness without any convex defect
Moreover, when the above peeling test 1 was performed on each of the glass laminate B-1 and the glass laminate B-2, as in the case of Example 1, they could be easily peeled off and the end surface of the silicone resin layer was also in sound condition. By a similar scrub cleaning, a residue could be also removed.

### Example 3

Example 3 is the same as Example 1 except that a supporting glass substrate, a resin layer, an outer frame layer, and a thin glass substrate different in kind, size, thickness, etc. were used.
As the supporting glass substrate, a glass substrate having a length of 720 mm, a width of 600 mm, a thickness of 0.6 mm, and a linear expansion coefficient of 38×10⁻⁷/°C (manufactured by Asahi Glass Co., Ltd., AN100) was used.
Moreover, as a resin for forming the resin layer, a linear polyorganosiloxane having a vinyl group in both terminal ends (manufactured by Arakawa Chemical Industries, Ltd., trade name "8500") and a methyl hydrogen polysiloxane having a hydrosilyl group in the molecule (manufactured by Arakawa Chemical Industries, Ltd., trade name "12031") were used. Then, they were mixed with a platinum-based catalyst (manufactured by Arakawa Chemical Industries, Ltd., trade name "CAT12070") to prepare a mixture, which was applied in a size of a length of 700 mm and a width of 580 mm (coated amount: 20 g/m²) using a screen printer and subsequently heat-cured at 180°C for 30 minutes in atmospheric air to form a silicone resin layer having a thickness of 20 µm. Here, a mixing ratio of the linear polyorganosiloxane and the methyl hydrogen polysiloxane was adjusted so that the molar ratio of the hydrosilyl group to the vinyl group becomes 1/1. The platinum-based catalyst was added in an amount of 5 parts by mass based on 100 parts by mass of the sum of the linear polyorganosiloxane and the methyl hydrogen polysiloxane.

Moreover, as a material for forming the outer frame layer, Ceramabond 835 manufactured by Audec Corp. (one containing zirconia as a main agent and a silicate compound as a binder) that is a paste-form material was used. Then, using a dispenser, the paste was applied in a width of 5 mm on the outer region having a width of 20 mm. Here, the paste was applied so as to come into contact with the end surface of the silicone resin layer. The thickness of the paste was more than 20 µm.
Moreover, as the thin glass substrate, a glass substrate having a length of 720 mm, a width of 600 mm, a thickness of 0.1 mm, and a linear expansion coefficient of 50×10⁻⁷/°C (manufactured by Asahi Glass Co., Ltd., AN100) was used.
A first main surface of the thin glass substrate was subjected to cleaning with pure water and UV cleaning to clean the surface. Subsequently, a surface of the silicone resin layer of the supporting glass substrate and the thin glass substrate were stuck each other at room temperature by a vacuum press. Then, the paste got squished with both glass substrates and expanded into a thickness of 20 µm. Thereafter, when heated at 100°C for 120 minutes in atmospheric air, the paste was cured to form an outer frame layer having a thickness of 20 µm and a width of 20 mm.

Thus, a "glass laminate C-1" not subjected to the heating treatment and a "glass laminate C-2" subjected to the heating treatment were obtained. In this regard, also in the process for obtaining the glass laminate C, as in the case of the glass laminate A, the glass laminate C was separately heated from room temperature to 450°C under a high vacuum (1.0×10⁻⁵ Pa) but no gas was generated from the glass laminate C. In the glass laminate C-1 and the glass laminate C-2 obtained, the thin glass substrate had been in close contact with the silicone resin layer without having air bubbles and was also satisfactory in smoothness without any convex defect.
Moreover, when the above peeling test 1 was performed on each of the glass laminate C-1 and the glass laminate C-2. However, the irradiation output of the laser light was not 1 W but 7 W. As a result, as in the case of Example 1, they could be easily peeled off and the end surface of the silicone resin layer was also in sound condition. By a similar scrub cleaning, a residue could be also removed. Furthermore, the thermal expansion coefficient of the outer frame layer after curing in the case of the glass laminate C-2 was about the same as that of the supporting glass substrate. Therefore, after the treatment at 450°C, warp of the supporting glass substrate or peeling of the outer frame layer did not occur.

### Example 4

In the present example, LCD is manufactured using the glass laminate C-1 obtained in Example 3.
Two sheets of the glass laminate C-1 are prepared, and one sheet is subjected to an array-forming step to form an array on a second main surface of the thin glass substrate. The remaining one sheet is subjected to a color filter-forming step to form a color filter on a second main surface of the thin glass substrate. After the glass laminate having the array formed thereon is stuck to the glass laminate having the color filter formed thereon, each supporting glass substrate is separated by irradiating the outer frame layer with a laser light one surface by one surface to destroy it. On the surface of the thin glass substrate after separation, no scratch leading to strength decrease is observed.
Subsequently, after the glass substrate was cut into 168 pieces of cells having a length of 51 mm and a width of 38 mm, a liquid crystal-injecting step and an inlet-sealing step are performed to form liquid crystal cells. A step of sticking a polarizing plate to the formed liquid crystal cell is performed and subsequently a module-forming step is performed to obtain LCD. In the thus obtained LCD, no problem on characteristic properties occurs.

### Example 5

In the present example, LCD is manufactured using the glass laminate A-1 obtained in Example 1.
Two sheets of the glass laminate A-1 are prepared and one sheet is subjected to an array-forming step, where an array is formed on a second main surface of the thin glass substrate. The remaining one sheet is subjected to a color filter-forming step to form a color filter on a second main surface of the thin glass substrate. After the glass laminate having the array formed thereon is stuck to the glass laminate having the color filter formed thereon, each supporting glass substrate is separated by irradiating the outer frame layer with a laser light one surface by one surface to destroy it On the surface of the thin glass substrate after separation, no scratch leading to strength decrease is observed.
Subsequently, the thickness of each thin glass substrate is thinned to a thickness of 0.15 mm by a chemical etching treatment. On the surface of the thin glass substrate after the chemical etching treatment, no occurrence of etch pits that cause optical problems is observed.
Thereafter, the thin glass substrate is cut into 168 pieces of cells having a length of 51 mm and a width of 38 mm and then, a liquid crystal-injecting step and an inlet-sealing step are performed to form liquid crystal cells. A step of sticking a polarizing plate to the formed liquid crystal cell is performed and subsequently a module-forming step is performed to obtain LCD. In the thus obtained LCD, no problem on characteristic properties occurs.

### Example 6

In the present example, LCD is manufactured using the glass laminate B-1 obtained in Example 2 and a non-alkali glass substrate (AN-100, manufactured by Asahi Glass Co., Ltd.) having a thickness of 0.7 mm.
A glass laminate is prepared and is subjected to a color filter-forming step to form a color filter on a second main surface of the thin glass substrate of the glass laminate. On the other hand, the non-alkali glass substrate is subjected to an array-forming step to form an array on one main surface.
After the glass laminate having the color filter formed thereon is stuck to the non-alkali glass substrate having the array formed thereon, the supporting glass substrate is separated from the glass laminate by irradiating the outer frame layer with a laser light one surface by one surface to destroy it. On the surface of the thin glass substrate after separation, no scratch leading to strength decrease is observed.
Subsequently, the one from which the supporting glass substrate have been separated is cut into 168 pieces of cells having a length of 51 mm and a width of 3 8 mm using a laser cutter or a scribe-break method. Thereafter, a liquid crystal-injecting step and an inlet-sealing step are performed to form liquid crystal cells. A step of sticking a polarizing plate to the formed liquid crystal cell is performed and subsequently a module-forming step is performed to obtain LCD. In the thus obtained LCD, no problem on characteristic properties occurs.

### Example 7

In Example 7, OLED is manufactured using the glass laminate C-1 obtained in Example 3.
The glass laminate is subjected to a step of forming a transparent electrode, a step of forming an auxiliary electrode, a step of vapor deposition of a hole-injecting layer, a hole-transporting layer, a light-emitting layer, an electron-transporting layer, and the like, and a step of sealing them to form an organic EL structure on the thin glass substrate of the glass laminate. Then, the supporting glass substrate is separated by irradiating the outer frame layer with a laser light one surface by one surface to destroy it On the surface of the thin glass substrate after separation, no scratch leading to strength decrease is observed.
Subsequently, the thin glass substrate is cut into 288 pieces of cells having a length of 41 mm and a width of 30 mm using a laser cutter or a scribe-break method. Thereafter, the glass substrate having the organic EL structure formed thereon and an opposing substrate are assembled and a module-forming step is performed to obtain OLED. In the thus obtained OLED, no problem on characteristic properties occurs.

### Comparative Example 1

A test similar to Example 1 was performed except that no outer frame layer was formed and the size of the resin layer having a length of 710 mm and a width of 590 mm was changed to a size of a length of 715 mm, and a width of 595 mm. In the obtained "glass laminate X-1" not subjected to the heating treatment and "glass laminate X-2" subjected to the heating treatment according to Comparative Example 1, the glass substrate had been in close contact with the silicone resin layer without generating air bubbles and was also satisfactory in smoothness without any convex defect
Moreover, the glass laminate X-1 and the glass laminate X-2 were subjected to the peeling test 2 shown in the following.

### Peeling Test 2

The glass laminate was placed on a platen so that the supporting glass substrate came up and the thin glass substrate came down, and the thin glass substrate was vacuum-contacted on the platen. Then, a sharp razor was applied between the thin glass substrate and the resin layer to open the edge of the interface forcedly, thereby gradually peeling them off from the end. As a result, an air layer was formed from the end into the interface between the silicone resin layer and the thin glass substrate, the air layer is expanded, and thus the supporting glass substrate with the silicone resin layer and the thin glass substrate could be easily peeled off

However, the silicone resin layer in the glass laminate X-2 subjected to the heating treatment was oxidized and whitened in the range of about 5 mm from the end surface. When the layer is thus whitened, there is a risk that a silica powder scatters to stain a forming step of a display device.

While the invention has been described in detail and with reference to specific embodiments thereof, it will be apparent to one skilled in the art that various changes and modifications can be made therein without departing from the spirit and scope thereof.
The present application is based on Japanese Patent Application No. 2008-108169 filed on April 17, 2008, and the contents are incorporated herein by reference.

### Industrial Applicability

The present invention can provides a glass laminate capable of suppressing the occurrence of glass defects induced by foreign matter such as air bubbles and dust entrained between the glass substrates, capable of being treated in a current production line without generating etch pits, and capable of easily separating closely contacted thin glass substrate from a resin layer.

### Description of Reference Numerals and Signs

- 10, 20, 50: Glass laminate (laminate of the invention)
- 12, 22, 52: Thin glass substrate
- 14,24,54: Resin layer
- 14α, 24α: End surface of resin layer
- 16, 26, 56: Outer frame layer
- 16α: End surface of outer frame layer
- 27: Sheet
- 27α: End surface of sheet
- 18, 28, 58: Supporting glass substrate
- 51: Platen

## Claims

1. A glass laminate comprising:
a thin glass substrate having a first main surface and a second main surface;
a supporting glass substrate having a first main surface and a second main surface; and
a resin layer and an outer frame layer arranged between the thin glass substrate and the supporting glass substrate,
wherein the resin layer is fixed to the first main surface of the supporting glass substrate and is in close contact with the first main surface of the thin glass substrate, while having easy releasability from the first main surface of the thin glass substrate, and
wherein the outer frame layer surrounds the resin layer on the first main surface of the supporting glass substrate so that the resin layer does not contact outside air.

2. The glass laminate according to claim 1, wherein an end surface of the resin layer is in contact with at least a part of an end surface of the outer frame layer.

3. The glass laminate according to claim 1 or 2, wherein the thin glass substrate is a glass substrate for a TFT array.

4. The glass laminate according to any one of claims 1 to 3, wherein the outer frame layer comprises a material having 5% mass loss temperature upon heating of 400°C or higher.

5. The glass laminate according to any one of claims 1 to 4, wherein the outer frame layer comprises at least one member selected from the group consisting of polyimide resins, silicone resins, and inorganic materials.

6. The glass laminate according to any one of claims 1 to 5, wherein the resin layer comprises at least one member selected from the group consisting of acrylic-based resins, polyolefin-based resins, polyurethane resins, and silicone resins.

7. The glass laminate according to any one of claims 1 to 6, wherein the outer frame layer has a width of 0.5 to 10 mm.

8. A support attached-panel for a display device, comprising the glass laminate according to any one of claims 3 to 7 and further having a TFT array on the second main surface of the thin glass substrate.

9. A panel for a display device, which is formed using the support attached-panel for a display device according to claim 8.

10. A display device having the panel for a display device according to claim 9.

11. A method for producing the glass laminate according to any one of claims 1 to 7, which comprises:
a resin layer-forming step of forming and fixing the resin layer in an inner region on the first main surface of the supporting glass substrate,
an outer frame layer-forming step of forming and fixing the outer frame layer in an outer region on the first main surface of the supporting glass substrate, and
a closely-contacting step of closely contacting the first main surface of the thin glass substrate to the resin layer and the outer frame layer.

12. A method for producing a support attached-panel for a display device,
wherein the method for producing the glass laminate according to claim 11 further comprises a step of forming a member for a display device on the second main surface of the thin glass substrate in the obtained glass laminate.

13. A method for producing a panel for a display device,
wherein the producing method according to claim 12 further comprises a separation step of separating the thin glass substrate from the supporting glass substrate in the obtained support attached-panel for a display device.

14. The method for producing a panel for a display device according to claim 13, wherein the separation step is a step of irradiating the outer frame layer with a laser light, thereby separating the thin glass substrate from the supporting glass substrate.
